# EUROPEAN PATENT APPLICATION

(11) **EP 4 631 471 A1**
(43) Date of publication of application: **15.10.2025**
(21) Application number: 25169230.7
(22) Date of filing: 08.04.2025
(51) Int. Cl.: A61C 7/00, A61C 5/00

(54) **LINGUAL RETAINER MADE OF 316 STAINLESS STEEL**

(30) Priority: 12.04.2024 US 202463633146 P
(71) Applicant: Acme Monaco Corporation, New Britain, CT 06052 (US)
(72) Inventor: Karabin, Lucas, New Britain, Connecticut 06052 (US); Hunter, Diane, New Britain, Connecticut 06052 (US)
(74) Representative: Rüger Abel Patentanwälte PartGmbB

(57) **Abstract**

A lingual retainer can be made of 316LVM stainless steel. A lingual retainer comprising at least one continuous strand of wire can be made of 316 stainless steel, e.g., 316LVM stainless steel. A method for manufacturing a lingual retainer includes twisting a plurality of continuous strands of wire made of 316 stainless steel, e.g., 316LVM stainless steel, coaxially around a continuous strand of wire made of 316 stainless steel, and flattening the plurality of continuous strands of wire made of 316 stainless steel twisted coaxially around the continuous strand of wire made of 316 stainless steel so that the lingual retainer has a flat cross-section.

## Description

### CROSS-REFERENCE TO RELATED APPLICATION(S)

This application claims the benefit of US Provisional Application No. 63/633,146, filed April 12, 2024, which is incorporated herein by reference in its entirety.

### TECHNICAL FIELD

This invention relates to lingual retainers commonly used, *inter alia,* after orthodontic treatment to maintain the corrected position of the teeth.

### BACKGROUND

A lingual retainer is a type of orthodontic appliance that is discreetly placed on the inner surface of the teeth, making it virtually invisible from the outside. It is commonly used after orthodontic treatment to maintain the corrected position of the teeth. Lingual retainers may be custom-made using a digital scan or impression of the patient's teeth or may be made by a professional, e.g., orthodontist at the time of adhering the retainer to the teeth. The design of the lingual retainer can vary, but the most common type is a thin wire that is bonded to the lingual surface of the teeth.

Lingual retainers are usually made from stainless steel, e.g., 304 stainless steel, or a nickel-titanium alloy. Stainless steel provides durability, while nickel-titanium offers flexibility and reduces the risk of breakage. 304 stainless steel is an austenitic stainless steel that contains chromium and nickel and is specified by SAE International as SAE steel grade 304. The lingual retainer is attached to the teeth using a dental adhesive.

The longevity of lingual retainers varies depending on factors such as the patient's oral hygiene, eating habits, and the type of material used. With proper care, lingual retainers can last for several years.

Multistrand lingual retainers or braided lingual retainers are a variation of the traditional lingual retainer. They are designed to provide enhanced stability and retention for maintaining the corrected position of teeth after orthodontic treatment. Multistrand lingual retainers consist of multiple (two or more) thin wires or strands that are braided or twisted together. The number of strands can vary depending on the specific case and the orthodontist's recommendation. The wires used in multistrand lingual retainers are also typically made of stainless steel, e.g., 304 stainless steel, or nickel-titanium. Multistrand lingual retainers offer several advantages. The multiple strands distribute the forces evenly across the teeth, providing enhanced stability and reducing the risk of individual wire breakage. They can also accommodate minor tooth movement more effectively compared to single-strand retainers.

Lingual retainers may be sold as a pre-contoured offset bend corresponding to a typical lingual surface of a patient's incisors and cuspids, as a straight wire that can be cut by the orthodontist to an appropriate length for the patient or on a spool.

Lingual retainers made of 304 stainless steel, while commonly used, can incur problems such as susceptibility to corrosion and potential to cause allergic reactions in some patients.

IOS Ortho of Stafford, TX advertises an "Ultra Flex retainer" indicated to be made of 316L medical grade stainless steel. According to the IOS Ortho website, the "Ultra Flex retainer is a type of a permanent lingual retainer made of a braided wire that does not need to be bent or shaped to accommodate the anatomy of the lingual surface." It appears this retainer does not need to bent or shaped because the retainer is a chain retainer (sold on a spool); that is, the retainer comprises a series of separate but interlinked figure 8 shaped links. The chain arrangement makes the retainer very flexible. However, a chain retainer has a high-profile height, which may cause mouth discomfort or tongue irritation, and has a tendency to accumulate plaque in the openings of the spaces formed by the chain links.

### SUMMARY

One aspect of the present invention relates to a lingual retainer made of 316LVM stainless steel.

The lingual retainer may comprise a single wire made of 316LVM stainless steel. The single wire may have a round cross-section or a flat cross-section. The lingual retainer may comprise a plurality of strands of wire made of 316LVM stainless steel twisted or braided together. For example, the lingual retainer may comprise two strands of wire made of 316LVM stainless steel twisted together or may comprise three or more strands of wire made of 316LVM stainless steel twisted together. The plurality of strands of wire may comprise a plurality of strands of wire twisted coaxially around a strand of wire. The plurality of strands of wire twisted or braided together may be flattened so that the lingual retainer has a flat cross-section. In one embodiment, at least one strand is a continuous strand that continuously extends the entire length of the retainer.

According to another aspect of the invention, the lingual retainer may comprise at least one continuous strand of wire (that is, at least one continuous strand that continuously extends the entire length of the retainer) made of 316 stainless steel. The at least one continuous strand of wire may be made of 316LVM stainless steel.

The lingual retainer may comprise a plurality of continuous strands of wire made of 316 stainless steel twisted or braided together. For example, the lingual retainer may comprise a plurality of continuous strands of wire made of 316 stainless steel twisted coaxially around a continuous strand of wire made of 316 stainless steel. The plurality of continuous strands of wire made of 316 stainless steel twisted coaxially around the continuous strand of wire made of 316 stainless steel may be flattened so that the lingual retainer has a flat cross-section. The continuous strands of wire may be made of 316LVM stainless steel. In one embodiment. the continuous strands continuously extend the entire length of the retainer.

Another aspect of the invention relates to a method for manufacturing a lingual retainer. The method comprises twisting a plurality of continuous strands of wire made of 316 stainless steel coaxially around a continuous strand of wire made of 316 stainless steel, and flattening the plurality of continuous strands of wire made of 316 stainless steel twisted coaxially around the continuous strand of wire made of 316 stainless steel so that the lingual retainer has a flat cross-section. The continuous strands of wire may be made of 316LVM stainless steel.

Another aspect of the invention relates to a method for using a lingual retainer of the present invention, comprising bonding the lingual retainer to a lingual side of a patient's teeth.

### BRIEF DESCRIPTION OF DRAWINGS

Fig. 1 is a perspective view of a flattened multistrand retainer of the present invention.
Fig. 2 is a view showing a retainer of the present invention secured to a lingual surface of a patient's teeth.
Fig. 3 is a perspective view of a multistrand twisted coaxial precursor to a multistrand retainer prior to flattening.

### DETAILED DESCRIPTION

According to a first embodiment of the present invention, a lingual retainer is made of 316LVM stainless steel. 316LVM stainless steel is surgical or implant grade stainless steel. It is a lower carbon austenitic stainless steel that is initially electric-arc melted. It is then vacuum arc remelted (VAR) or electro slag remelted. The remelt improves the purity and homogeneity of the alloy. 316LVM stainless steel is available from, e.g., Fort Wayne Metals Research Products, LLC of Fort Wayne, Indiana, Ulbrich Stainless Steels and Special Metals Inc. of North Haven, CT, United Performance Metals (UPM) of Cincinnati, OH, and Vincent Metals of Minneapolis, MN.

By way of example only, the stainless steel alloy for 316 stainless steel may have an alloy composition, in mass percent, ≤ 0.10% carbon, ≤ 2.00% manganese, ≤ 0.045% phosphorus, ≤ 0.03% sulfur, ≤1.0% silicon, 16.0 to 18.5% chromium, 10.0 to 14.0% nickel, 2.0 to 3.0% molybdenum, ≤ 0.16% nitrogen, ≤ 4.0% copper, the balance iron and unavoidable impurities.

By way of example only, the stainless steel alloy may meet the requirements specified by ASTMA-313, September 14, 2018, of ASTM International. That is, the alloy composition may be, in mass percent, as follows (note: if range is not given, the percentage value is a maximum):

| | | |
|---|---|---|
| Carbon | C | 0.07 |
| Chromium | Cr | 16.5-18.0 |
| Nickel | Ni | 10.5-13.5 |
| Molybdenum | Mo | 2.0-2.5 |
| Manganese | Mn | 2 |
| Silicon | Si | 1 |
| Phosphorus | P | 0.045 |
| Sulfur | S | 0.03 |
| Nitrogen | N | 0.10 |
| Copper | Cu | - |
| Iron | Fe | balance |

More particularly, the alloy composition used for the present invention may be, in mass percent, as follows (note: if range is not given, the percentage value is a maximum):

| | | |
|---|---|---|
| Carbon | C | 0.03 |
| Chromium | Cr | 16.5-18.0 |
| Nickel | Ni | 10.5-13.5 |
| Molybdenum | Mo | 2.0-2.5 |
| Manganese | Mn | 2 |
| Silicon | Si | 1 |
| Phosphorus | P | 0.045 |
| Sulfur | S | 0.03 |
| Nitrogen | N | 0.10 |
| Copper | Cu | - |
| Iron | Fe | balance |

The lingual retainer may comprise a single wire made of 316LVM stainless steel, multiple strands of wires or sections linked in a chain format. The single wire may have a round cross-section or a flat cross-section. The lingual retainer may comprise a plurality of strands of wire made of 316LVM stainless steel twisted or braided together. For example, the lingual retainer may comprise two strands of wire made of 316LVM stainless steel twisted together or may comprise three or more strands of wire made of 316LVM stainless steel twisted together. The plurality of strands of wire may comprise a plurality of strands of wire, e.g., five strands twisted coaxially around a central strand of wire. The plurality of strands of wire twisted or braided together may be flattened so that the lingual retainer has a flat cross-section. In a preferred embodiment, at least one strand (or each of the strands) is a continuous strand that continuously extends the entire length of the retainer.

According to a second embodiment of the invention, the lingual retainer may comprise at least one continuous strand of wire (a continuous strand that continuously extends the entire length of the retainer) made of 316 stainless steel. The at least one continuous strand of wire may be made of 316LVM stainless steel.

The lingual retainer may comprise a plurality of continuous strands of wire made of 316 stainless steel twisted or braided together. For example, according to a preferred embodiment, the lingual retainer may comprise a plurality of, e.g., five, continuous strands of wire (that continuously extend the entire length of the retainer) made of 316 stainless steel twisted coaxially around a central continuous strand of wire made of 316 stainless steel. The plurality of continuous strands of wire made of 316 stainless steel twisted coaxially around the continuous strand of wire made of 316 stainless steel may be flattened so that the lingual retainer has a flat cross-section. The continuous strands of wire may be made of 316LVM stainless steel.

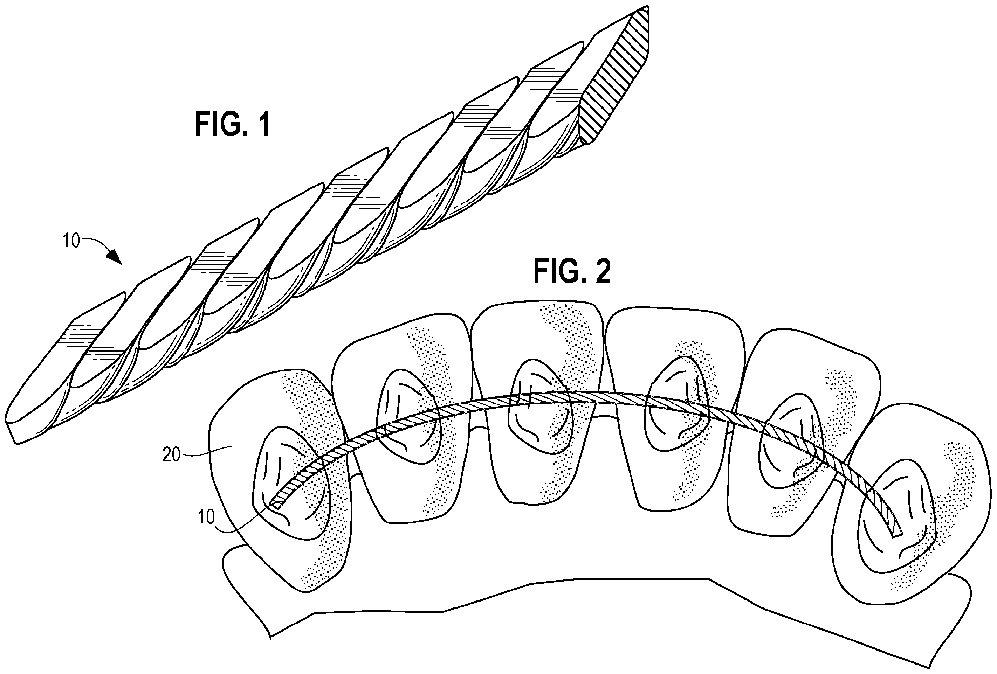

Fig. 1 is a perspective view of a flattened, twisted multistrand retainer 10 of the present invention.

Fig. 2 is a view showing a retainer 10 (which may be a single strand wire or a multistrand wire, and may or may not be flattened), secured to a lingual surface 20 of a patient's teeth using a dental adhesive.

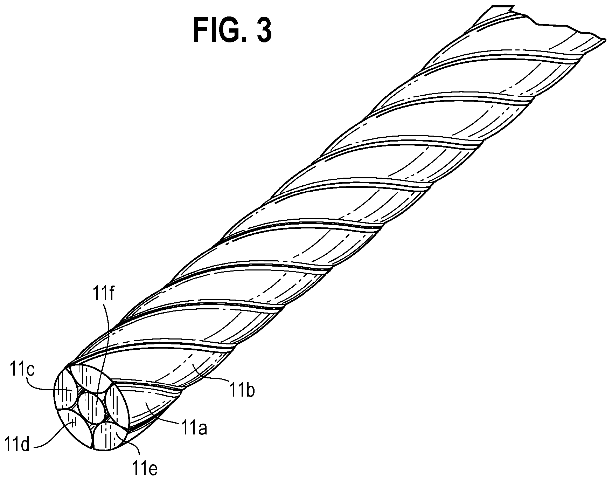

A method for manufacturing a lingual retainer according to a preferred embodiment of the present invention will be described. As shown in Fig. 3, a plurality of (in this embodiment 5, although more or less strand can be used) continuous strands of wire 11a, 11b, 11c, 11d, 11e made of 316 stainless steel are twisted coaxially around a continuous central strand of wire 11f made of 316 stainless steel. The plurality of continuous strands of wire 11a, 11b, 11c, 11d, 11e twisted coaxially around the continuous strand of wire 11f are then flattened so that the lingual retainer has a flat cross-section, as shown in Fig. 1.

Of course, it is possible to simply twist or braid two or more continuous strands of wire together without twisting strands around a central strand.

In these embodiments also, the continuous strands of wire may be made of 316LVM stainless steel.

Thus, the retainer of the present invention can be a single strand wire, twisted wires or braided wires or, preferably, a multistrand twisted retainer. The single strand wire may be round, flat or profiled in cross-section. For example, a round wire may have a diameter of 0.019 to 0.021 inches. As a flat wire, it may have a thickness of 0.008 to 0.016 inches and a width of 0.025 to 0.040 inches, preferably a thickness of 0.009 to 0.011 inches and a width of 0.028 to 0.030 inches. However, the twisted coaxial multistrand flatted wire has an advantage over a multistrand braided wire in that a multistrand braided wire has more tendency to break.

The multistrand twisted form can use two or more braided wires of 316, e.g., 316LVM stainless steel. The twisted or braided retainer may be flattened. For example, two or more wires of 316 stainless steel (e.g., having a diameter of 0.007 to 0.008 inches) can be twisted and the twisted wire flattened so as to have a thickness of 0.008 to 0.016 inches and a width of 0.025 to 0.040 inches, preferably a thickness of 0.009 to 0.011 inches and a width of 0.028 to 0.030 inches.

The lingual retainers of the present invention are flexible enough to enable the orthodontist to adhere the wire to the lingual surfaces of the patient's teeth. However, it is less flexible than a chain retainer, which may be more desirable in certain applications.

The lingual retainer of the present invention is typically used by taking an impression of the patient's teeth, making a model of the patient's teeth from the impression, forming a retainer to a desired shape to match the model of the patient's teeth and installing the shaped retainer by bonding it to the patient's teeth. Since the step of forming the retainer to the desired shape to match the model of the patient's teeth can be performed at a lab, the orthodontist does not need to shape the retainer to match the teeth chair-side, thereby saving time for the orthodontist. On the other hand, a chain retainer must be attached to a first tooth, pulled taut and attached to a second tooth, pulled taut and attached to a third tooth, etc.

The lingual retainer of the present invention also has other advantages over a chain retainer, including that it has a lower profile height than a chain retainer, resulting in less mouth discomfort or tongue irritation, and will accumulate less plaque than a chain retainer, which has a tendency to accumulate plaque in the openings of the spaces formed by the chain links.

According to one supplier of 316LVM stainless steel (Ulbrich Stainless Steels and Special Metals Inc. of North Haven, CT), 316LVM stainless steel has higher nickel, lower carbon, lower molybdenum and lower chromium content than standard 316L. Thus, 316LVM stainless steel offers superior corrosion resistance and biocompatibility compared to 304 stainless steel. The vacuum arc remelt (VAR) or electro slag remelt process removes impurities, improves the homogeneity of the metal, and provides a metal with a more uniform chemistry and minimal voids. The vacuum arc remelt (VAR) or electro slag remelt process may also help to form a more effective chromium oxide layer on the surface of the material, which can help hold nickel inside the retainer, which can reduce the possibility of an allergic reaction.

## Claims

1. A lingual retainer made of 316LVM stainless steel.

2. The lingual retainer according to claim 1, wherein the lingual retainer comprises a single wire made of 316LVM stainless steel, wherein the single wire preferably has a round cross-section or a flat cross-section.

3. The lingual retainer according to claim 1, wherein the lingual retainer comprises a plurality of strands of wire made of 316LVM stainless steel twisted or braided together, the lingual retainer preferably comprising two strands of wire made of 316LVM stainless steel twisted together.

4. The lingual retainer according to claim 3, wherein the lingual retainer comprises three or more strands of wire made of 316LVM stainless steel twisted together, the plurality of strands of wire preferably comprising a plurality of strands of wire twisted coaxially around a strand of wire.

5. The lingual retainer according to claim 3, wherein the plurality of strands of wire twisted or braided together are flattened so that the lingual retainer has a flat cross-section.

6. A lingual retainer comprising at least one continuous strand of wire made of 316 stainless steel that continuously extends the entire length of the retainer.

7. The lingual retainer according to claim 6, wherein the at least one continuous strand of wire is made of 316LVM stainless steel.

8. The lingual retainer according to claim 6, wherein the lingual retainer comprises a plurality of continuous strands of wire made of 316 stainless steel twisted or braided together, wherein the continuous strands of wire are preferably made of 316LVM stainless steel.

9. The lingual retainer according to claim 6, wherein the lingual retainer comprises a plurality of continuous strands of wire made of 316 stainless steel twisted coaxially around a continuous strand of wire made of 316 stainless steel.

10. The lingual retainer according to claim 9, wherein the continuous strands of wire are made of 316LVM stainless steel.

11. The lingual retainer according to claim 9, wherein the plurality of continuous strands of wire made of 316 stainless steel twisted coaxially around the continuous strand of wire made of 316 stainless steel are flattened so that the lingual retainer has a flat cross-section.

12. The lingual retainer according to claim 11, wherein the continuous strands of wire are made of 316LVM stainless steel.

13. A method for manufacturing the lingual retainer according to claim 11, comprising twisting a plurality of continuous strands of wire made of 316 stainless steel coaxially around a continuous strand of wire made of 316 stainless steel, and flattening the plurality of continuous strands of wire made of 316 stainless steel twisted coaxially around the continuous strand of wire made of 316 stainless steel so that the lingual retainer has a flat cross-section.

14. The method for manufacturing the lingual retainer according to claim 13, wherein the continuous strands of wire are made of 316LVM stainless steel.

15. A method for using the lingual retainer according to claim 6, comprising bonding the lingual retainer to a lingual side of a patient's teeth.
